# EUROPÄISCHE PATENTSCHRIFT

(11) **EP 1 423 315 B1**
(45) Veröffentlichungstag und Bekanntmachung des Hinweises auf die Patenterteilung: **12.01.2005**
(21) Anmeldenummer: 02748555.6
(22) Anmeldetag: 28.05.2002
(51) Int. Cl.: B65G 17/42

(54) **KETTENTRANSPORTSYSTEM MIT ANBAUTEILEN**
CHAIN-TRANSPORT SYSTEM WITH ADD-ON COMPONENTS
SYSTEME DE TRANSPORT A CHAINE COMPORTANT DES PIECES RAPPORTEES

(30) Priorität: 20.08.2001 DE 10139372
(43) Veröffentlichungstag der Anmeldung: 02.06.2004
(73) Patentinhaber: Bühler Bindler GmbH, 51702 Bergneustadt (DE)
(72) Erfinder: KRISCHER, Achim, 51688 Wipperfürth (DE)
(74) Vertreter: Frommhold, Joachim, Dr.
(86) Internationale Anmeldenummer: PCT/DE2002/001962
(87) Internationale Veröffentlichungsnummer: WO 2003/018445

(56) Entgegenhaltungen:
- US-A- 4 301 915

## Beschreibung

Die Erfindung bezieht sich auf ein Kettentransportsystem mit Anbauteilen gemäss dem Oberbegriff von Anspruch 1.

Derartige Kettentransportsysteme mit speziell ausgebildeten Anbauteilen werden in der Industrie in zahlreichen Produktionsprozessen verwendet. Insbesondere kommt ein derartiges System bei senkrechten Kettentransporten für mit Schokolade oder dergleichen befüllten Formen zum Einsatz. Die speziell ausgebildeten Anbauteile können z.B. Aluminiumwinkel sein, die an ausgewählten Kettengliedern einer Rollenkette befestigt sind.

Die US 4,301,915 beschreibt eine Rollenketten-Fördereinrichtung mit Befestigungsmittein zur Anbringung von sich quer zur Kette erstreckenden Stäben. Die Stäbe sind zwar form- und kraftschlüssig mit dem Befestigungsmittel verbunden, können jedoch einerseits entlang der Stabrichtung relativ zu den Befestigungsmitteln verrutscht werden und andererseits um die Stabachse relativ zu den Befestigungsmitteln verdreht werden, wenn eine entsprechende Kraft bzw. ein entsprechendes Drehmoment auf einen solchen Stab einwirkt.

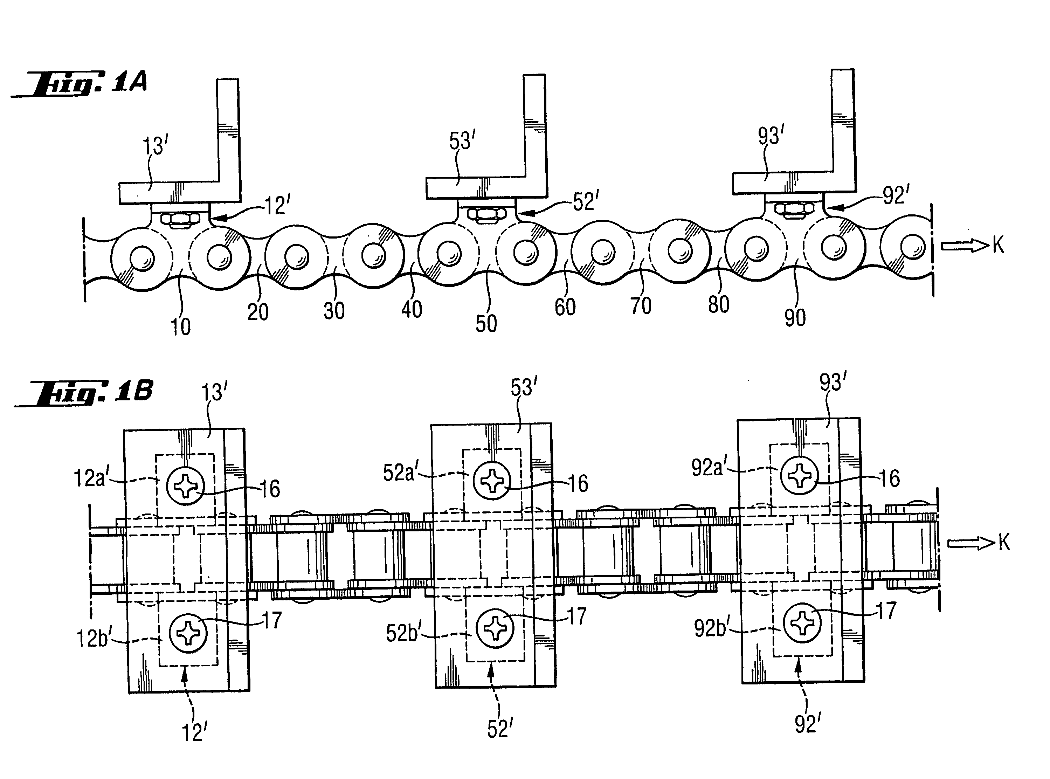

Fig.1A und 1B zeigen ein weiteres bekanntes System zum Befestigen von Anbauteilen an eine Transportkette, insbesondere zum Befestigen von Aluminiumwinkeln 13',53',93' an ausgewählte Kettenglieder 10, 50, 90 einer Transportkette. Hierbei sind die Aluminiumwinkel 13' mittels Senkschrauben 16, 17 an den beidseitigen Winkellaschen 12a' bzw.12b' bzw. der Rollenkette verschraubt. Zur Verschraubung der Winkel 13', 53', 93', mussten diese an jeder Verschraubungsposition angerissen, gebohrt und anschliessend gesenkt werden. Diese Bearbeitungsschritte sind sehr zeit- und somit kostenintensiv.

Es stellte sich daher die Aufgabe, ein System zum Befestigen von Anbauteilen an eine Transportkette, insbesondere zum Befestigen von Aluminiumwinkeln an einer Rollenkette bereitzustellen, das eine rasche und damit kostensparende Anbringung der Anbauteile an den Kettengliedern einer Transportkette ermöglicht.

Diese Aufgabe wird durch das erfindungsgemässe Kettentransportsystem gemäss Anspruch 1 gelöst.

Das erfindungsgemässe Kettentransportsystem weist speziell angepasste Kettenglieder bzw. Kettenbolzen auf, wobei eine formschlüssige Verbindung zwischen einem Verbindungsbereich des Anbauteils und einem Verbindungsbereich des angepassten Kettenglieds bzw. Kettenbolzens ermöglicht wird.

Eine besonders vorteilhafte Ausführung des erfindungsgemässen Systems zum Befestigen von Anbauteilen an einer Transportkette verwendet speziell ausgebildete Anpassungsteile, mit deren Hilfe die jeweiligen Anbauteile an dem jeweiligen ausgewählten Kettenglied befestigt sind.

Weitere vorteilhafte Ausführungen des erfindungsgemässen Kettentransportsystems und des erfindungsgemässen Systems zum Befestigen von Anbauteilen an einer Transportkette ergeben sich aus den Unteransprüchen 2 bis 15 bzw. den Unteransprüchen 17 bis 29.

Weitere Vorteile, Merkmale und Anwendungsmöglichkeiten der Erfindung ergeben sich aus der nun folgenden Beschreibung eines besonders bevorzugten Ausführungsbeispiels der Erfindung, wobei:
- Fig. 1A und 1B: eine Seitenansicht bzw. eine Draufsicht eines bekannten Kettentransportsystems sind.
- Fig. 2A und 2B: eine Seitenansicht bzw. eine Draufsicht des erfindungsgemässen Kettentransportsystems mit dem erfindungsgemässen System zum Befestigen von Anbauteilen an eine Transportkette sind;
- Fig. 3: eine Seitenansicht des erfindungsgemässen Anpassungsteils ist;
- Fig. 4: eine Vorderansicht des erfindungsgemässen Anpassungsteils von Fig.3 in der Richtung des Pfeils A ist;
- Fig. 5: eine Seitenansicht ist, die das erfindungsgemässe Zusammenfügen des Anpassungsteils mit dem Anbauteil zeigt;
- Fig. 6: eine Vorderansicht ist, die das erfindungsgemässe Zusammenfügen eines ausgewählten Kettenglieds mit dem erfindungsgemässen Anpassungsteil zeigt.

Fig. 1A zeigt einen Ausschnitt aus einer herkömmlichen Transportkette mit Kettengliedern 10, 20, 30, ..., 90, die sich entlang einer Kettenlängsrichtung K erstrecken. Einige ausgewählte Kettenglieder 10, 50, 90 des dargestellten Kettenausschnitts weisen Anpassungsteile 12', 52' bzw. 92' auf, an denen jeweils ein Anbauteil 13', 53' bzw. 93' befestigt ist.

Fig. 1B zeigt den in Fig. 1 A gezeigten Kettenausschnitt in der Draufsicht. Die Anpassungsteile 12', 52' und 92' der ausgewählten Kettenglieder 10, 50 bzw. 90 weisen jeweils ein Paar Winkellaschen 12a', 12b', 52a', 52b' bzw. 92a', 92b' auf, die sich beidseitig von der Transportkette weg erstrecken. Jedes der Anbauteile 13', 53' bzw. 93' (Fig. 1A) ist an dem entsprechenden Anpassungsteil 12', 52' bzw. 92' jeweils mit Hilfe von Senkschrauben 16 und 17 befestigt.

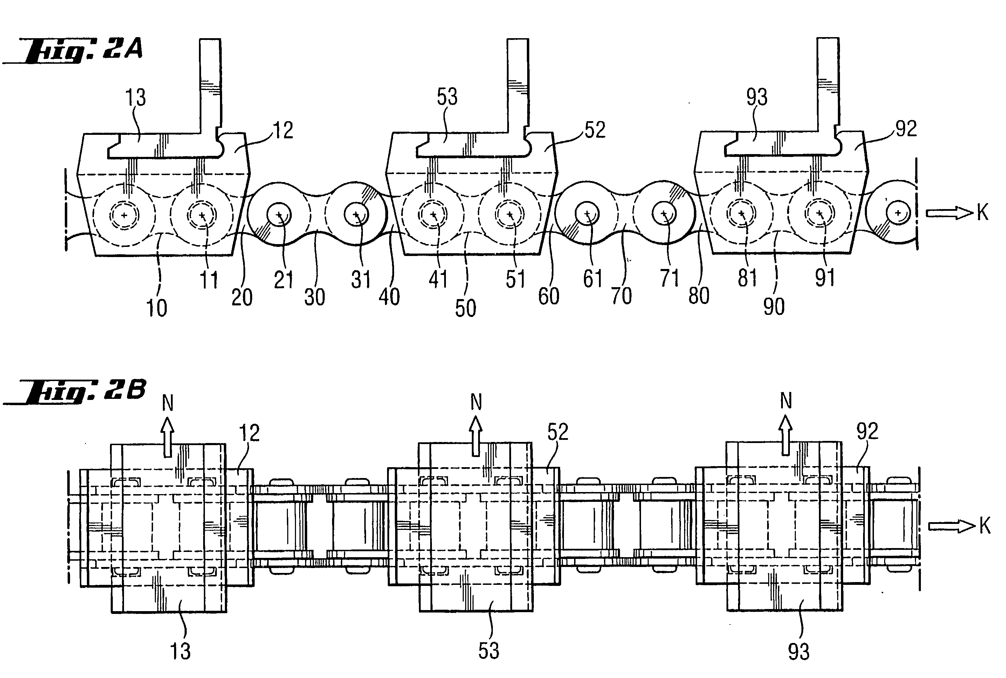

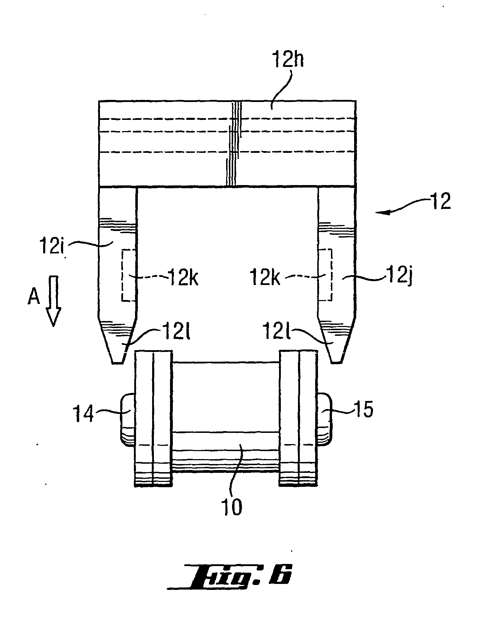

Fig. 2A ist eine Seitenansicht eines Ausschnitts aus dem erfindungsgemässen Kettentransportsystem, das mit dem erfindungsgemässen System zum Befestigen von Anbauteilen an der Transportkette ausgestattet ist. Der abgebildete Ausschnitt besteht aus den Kettengliedern 10, 20, 30,...90, wobei z.B. die Kettenglieder 10, 50 und 90 speziell angepasste Kettenglieder sind, indem sie mit einem Anpassungsteil 12, 52 bzw. 92 verbunden sind. Vorzugsweise ist die Kette komplett, d.h. an allen Kettengliedern, mit verlängerten Bolzen ausgeführt, so dass an jeder beliebigen Position das Anpassungsglied eingesetzt werden kann. Das Anpassungsteil 12, 52 bzw. 92 ist mit dem dazugehörenden Kettenglied 10, 50 bzw. 90 durch eine Einrastverbindung bzw. eine Clipsverbindung (siehe Fig. 6) verbunden. Das entsprechende Anbauteil 13, 53 bzw. 93 ist mit dem entsprechenden Anpassungsteil 12, 52 bzw. 92 ebenfalls durch eine Einrastverbindung bzw. Clipsverbindung verbunden (siehe Fig. 5), wobei ein Verbindungsbereich des jeweiligen Anbauteils 13, 53, 93 mit einem entsprechend komplementär als Aussparung ausgebildeten Verbindungsbereich des entsprechenden Anpassungsteils 12, 52 bzw. 92 formschlüssig und kraftschlüssig in Eingriff ist.

Fig. 2B zeigt den Ausschnitt der Transportkette von Fig. 2A in der Draufsicht. Die gezeigten drei Anbauteile 13, 53 und 93, die in der entsprechenden Aussparung des jeweiligen Anpassungsteils 12, 52 bzw. 92 form- und reibschlüssig eingepasst sind, sind Aluminiumwinkel. Das Material der Anpassungsteile 12, 52 bzw. 92 ist vorzugsweise ein elastischer Kunststoff. Wichtig ist, dass sich beim Eindrücken der Anbauteile 13, 53 und 93 in die jeweiligen Anpassungsteile 12, 52 bzw. 92 das Material der Anpassungsteile elastisch verformen kann, so dass die Anbauteile über einen Druckpunkt in die Aussparung der Anpassungsteile eingedrückt werden können, woraufhin zwischen den Anbauteilen 13, 53 und 93 und den entsprechenden Anpassungsteilen 12, 52 bzw. 92 die form- und reibschlüssige Verbindung entsteht. Dieselbe Verformung des Materials der Anpassungsteile 13, 52 und 92 ist auch beim Herstellen der form- und reibschlüssigen Verbindung zwischen den Kettengliedern 10, 50 und 90 mit den entsprechenden Anpassungsteilen 12, 52 bzw. 92 erforderlich.

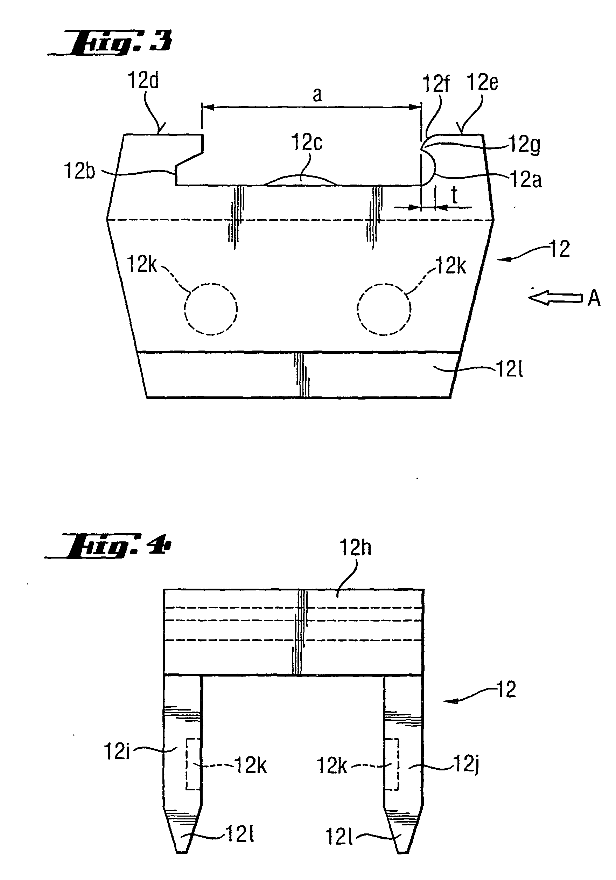

Fig. 3 ist eine Seitenansicht des erfindungsgemässen Anpassungsteils 12. Es dient als Adapter zwischen einem ausgewählten Kettenglied 10 und einem mit dem Kettenglied 10 zu verbindenden Anbauteil 13. Der obere Bereich des Anpassungsteils 12 ist der Verbindungsbereich 12a, 12b, 12c, der als Aussparung zur Aufnahme des entsprechenden komplementären Verbindungsbereichs des Anbauteils 13 dient (Fig. 5).

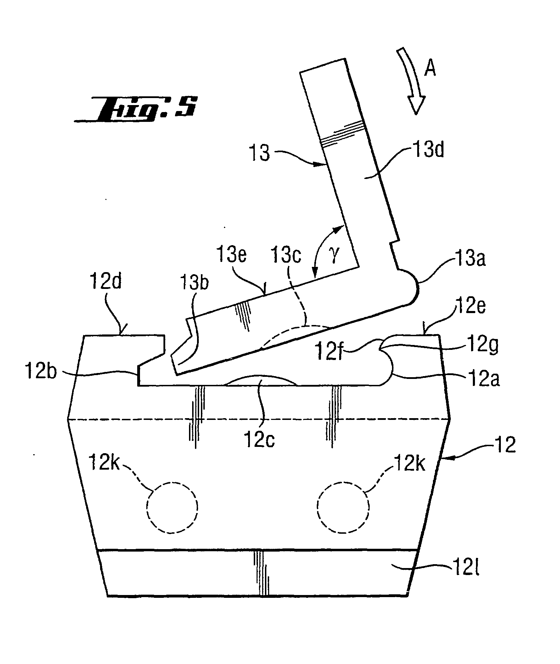

Der Verbindungsbereich ist eine nutartige Aussparung im oberen Teil des Anpassungsteils 12, wobei die Nut eine lichte Weite a hat. An der einen Nutwand befindet sich eine Hinterschneidung 12a, die als konkave Rundung mit einer Hinterschneidungstiefe t ausgebildet ist. In der Mitte des Bodens der Aussparung befindet sich eine Erhebung 12c, und an der anderen Nutwand ist eine der Hinterschneidung 12a gegenüberliegende Hinterschneidung 12b ausgebildet. Analog kann auch eine Bohrung vorgesehen sein, die zur Aufnahme einer Arretierwarze im Anbauteil 13 dient. Die Oberflächen 12d und 12e auf beiden Seiten der Aussparung liegen in einer Ebene. Die Oberfläche oberhalb der Hinterschneidung 12a weist eine konvexe Rundung 12f auf. Zwischen der als Hinterschneidung dienenden konkaven Rundung 12a und der konvexen Rundung 12f befindet sich ein Übergangsbereich 12g, der am weitesten in die Nut hineinragt. Das Anpassungsteil 12 weist auch Aussparungen bzw. Bohrungen 12k auf, die an der Innenseite von Schenkeln 12i und 12j (Fig. 4, Fig. 6) des Anpassungsteils 12 vorgesehen sind.

Fig. 4 ist eine Ansicht des Anpassungsteils 12 der Fig. 3 entlang des Pfeils A. Das Anpassungsteil 12 hat in seinem Querschnitt senkrecht zur Richtung A im wesentlichen einen U-förmigen Querschnitt mit einem Quersteg 12a und zwei Schenkeln 12i und 12j, die sich parallel zueinander und senkrecht zu dem Quersteg 12a erstrecken. Die beiden Aussparungen bzw. Bohrungen 12k an den Innenseiten der Schenkel 12i und 12j dienen zur formschlüssigen Aufnahme des entsprechenden ausgewählten Kettenglieds 10 (siehe Fig. 6).

Fig. 5 und Fig. 6 zeigen den Vorgang des Zusammenfügens eines erfindungsgemässen Anbauteils 13 mit einem erfindungsgemässen Anpassungsteil 12 bzw. eines Kettenglieds 10 mit dem erfindungsgemässen Anpassungsglied 12.

Fig. 5 zeigt das erfindungsgemässe Anbauteil 13, das einen ersten Winkelschenkel mit einer ersten Verbreiterung 13a, einer zweiten Verbreiterung 13b und einer Vertiefung 13c und einem zweiten Winkelschenkel 13d zeigt. Statt der Vertiefung 13c kann auch eine Arretierwarze vorgesehen sein. Der Winkel γ zwischen dem ersten Winkelschenkel und dem zweiten Winkelschenkel beträgt 90°. Wenn nun das erfindungsgemässe Anbauteil 13, wie durch den Pfeil A angedeutet, von oben her mit seinem ersten Winkelschenkel in die Aussparung des Anpassungsteils 12 hineingedreht wird, gleitet die konvexe Rundung 13a des Anbauteils 13 an der konvexen Rundung 12f des Anpassungsteils entlang, wobei eine zunehmende elastische Verformung des Anpassungsteils 12 stattfindet.

Entscheidend ist, dass die lichte Weite a (siehe Fig.3) der nutartigen Vertiefung des Anpassungsteils 12 zunehmend aufgeweitet wird, wobei der Berührungspunkt mit der konvexen Rundung 13a des Anbauteils 13 sich beim Eindrücken der Anbauteile 13, 53 und 93 in die jeweiligen Anpassungsteile 12, 52 bzw. 92 nach unten verschiebt, so dass die Anbauteile über einen Druckpunkt in die Aussparung der Anpassungsteile eingedrückt werden können.

Die Aufweitung der Nut kommt dadurch zustande, dass beim Eindrücken des Anbauteils 13 in das Anpassungsteil 12 die konvexe Rundung 13a des Anbauteils 13 an der konvexen Rundung 12f des Anpassungsteils 12 entlang gleitet, wobei die Berührungslinie zwischen der konvexen Rundung 13a und der konvexen Rundung 12f sich abwärts bewegt, bis sie sich im Übergangsbereich 12g zwischen der konvexen Rundung 12f und der konkaven Rundung 12a des Anpassungsteils 12 befindet. Jetzt hat man den maximalen Druckpunkt erreicht. Bei weiterem Eindrücken schnappt die elastisch aufgeweitete Nut oberhalb der Verbreiterungen 13a und 13b zusammen, wodurch das Anbauteil 13 durch die elastische Spannungsenergie in die formschlüssige Stellung geschoben wird. Für eine besonders feste formschlüssige Verriegelung zwischen dem Anbauteil 13 und dem Anpassungsteil 12 ist es von besonderer Bedeutung, dass das Anbauteil 13 einen viel grösseren Elastizitätsmodul als das für seine Aufnahme bestimmte Anpassungsteil 12 hat. Mit anderen Worten sollte das Anbauteil 13 im wesentlichen annähernd starr sein während das Aufnahmeteil weniger starr und leichter elastisch verformbar ist. Sobald dann das starre Anbauteil 13 in die Aussparung des Anpassungsteils 12 eingerastet ist, wird durch Blockierung der Bodenfläche der nutartigen Aussparung des Anpassungsteils dessen elastische Verformung erschwert, so dass eine viel grössere Kraft als beim Eindrücken des Anbauteils notwendig ist, um dieses wieder aus dem Anpassungsteil 12 herauszuziehen. Um einem seitlichen Herausrutschen des Anbauteils 13 aus der Nut des Anpassungsteils 12 vorzubeugen, befindet sich am Boden der Nut eine Erhebung 12c, die in eine komplementäre Vertiefung 13c am ersten Winkelschenkel des Anbauteils 13 eingearbeitet ist. Statt der Erhebung 12c kann auch eine Bohrung vorgesehen sein, in die eine Arretierwarze formschlüssig hineinpasst.

Vorzugsweise ist die zur Aufnahme des ersten Winkelschenkels bestimmte Aussparung des Anpassungsteils 12 etwas kleiner als die exakt komplementäre Form des ersten Winkelschenkels des Anbauteils 13 ausgebildet, so dass auch nach dem Einrasten eine leichte elastische Aufweitung der Nut beibehalten bleibt, was dazu führt, dass neben dem reinen Formschluss auch noch ein beachtlicher Reibschluss zwischen dem Anbauteil 13 und dem Anpassungsteil 12 besteht

In Fig. 6 liegen ähnliche Verhältnisse wie in Fig. 5 vor. Das Anpassungsteil 12 wird in der Richtung des Pfeils A über das Kettenglied 10 geschoben, wobei seitlich überstehenden Bolzen 14 und 15 des Kettenglieds 10 mit den Abschrägungen 12l an der Innenseite der Schenkel 12i und 12j zum Anliegen kommen. Wenn das Anpassungsteil 12 nun weiter auf das Kettenglied 10 geschoben wird, werden die beiden Schenkel 12i und 12j durch die an den Abschrägungen 12l anliegenden überstehenden Bolzen 14 und 15 zunehmend aufgeweitet, was zu einer zunehmenden Druckkraft auf das Anpassungsteil 12 führt, bis ein maximaler Druckpunkt erreicht wird. Dieser Druckpunkt wird dann überschritten, wenn die beiden überstehenden Bolzen 14 und 15 des Kettenglieds 10 in die Aussparungen bzw. Bohrungen 12k an der Innenseite der Schenkel 12i und 12j einrasten, so dass eine formschlüssige Verbindung zwischen dem Anpassungsteil 12 und dem Kettenglied 10 zustande kommt. Auch hier ist es vorteilhaft, wenn die zur Aufnahme des Kettenglieds 10 mit seinen beiden überstehenden Bolzen 14 und 15 bestimmte U-Form mit den Schenkeln 12i und 12j etwas kleiner als für einen exakten Formschluss dimensioniert ist, so dass auch hier neben dem reinen Formschluss ein Reibschluss zwischen dem Anpassungsteil 12 und dem Kettenglied 10 wirkt.

Selbstverständlich ist die Erfindung nicht auf das beschriebene Ausführungsbeispiel beschränkt. So könnten z.B. an den Enden der Schenkel 12i, 12j des Anpassungsteils 12 ebenfalls Einrastbereiche ausgebildet sein, so dass nach dem form-und reibschlüssigen Einrasten des Kettenglieds 10 zwischen den beiden Schenkeln 12i und 12j ein Sicherungsbügel (nicht gezeigt) mit entsprechenden Einrastvorrichtungen mit den Schenkelenden in Eingriff gebracht werden kann, wodurch eine zusätzliche Stabilisierung des U-förmigen Anpassungsteils 12 und somit einen zusätzliche Absicherung der Verbindung zwischen dem Anpassungsteil 12 und dem Kettenglied 10 gewährleistet wird. Ausserdem kann an Stelle der Einrastverbindung zwischen dem Kettenglied 10 und dem Anpassungsteil 12 ein besonders angepasstes einstückiges Kettenglied verwendet werden, das schon beim Zusammenbau der Rollenkette mit in diese eingebaut wird.

### Bezugszeichenliste

- Kettenglieder: 10, 20, 30, 40, 50, 60, 70, 80, 90,
- Drehachsen: 11, 21, 31, 41, 51, 61, 71, 81, 91
- Angepasste Kettenglieder: 10-12, 50-52, 90-92
- Anpassungsteile: 12, 52, 92
- Anbauteile: 13, 53, 93
- Verbindungsbereich: 12a, 12b, 12c
- Verbindungsbereich: 13a, 13b, 13c
- Oberfläche: 12d, 12e
- Hinterschneidung: 12a, 12b
- Verbreiterungen: 13a, 13b
- Bolzen: 14, 15
- Konkave Rundung: 12a
- Konvexe Rundung: 12f
- Übergangsbereich: 12g
- Quersteg: 12h
- Schenkel: 12i, 12j
- Aussparung: 12k
- Abschrägung: 12l
- Nutrichtung: N
- Kettenrichtung: K
- Winkelschenkel: 13d
- Innenfläche eines Winkelschenkels: 13e
- Winkel: γ
- Aufweitung: Δ a
- lichte Weite: a
- Hinterschneidungstiefe: t

### Stand der Technik:

- Anpassungsteil: 12', 52', 92'
- Anbauteil: 13', 53', 93'
- Winkellaschen: 12a', 12b', 52a', 52b', 92a', 92b'

## Patentansprüche

1. Kettentransportsystem, welches aneinandergereihte Kettenglieder (10, 20, 30, 40, 50, ...) aufweist und bei dem benachbarte Kettenglieder (10-20, 20-30, 30-40, 40-50,...) miteinander um eine den beiden Kettengliedern gemeinsame Drehachse (11, 21, 31, 41, 51, ...) drehbar verbunden sind und alle Drehachsen (11, 21, 31, 41, 51) des Kettentransportsystems zueinander parallel verlaufen, wobei mindestens einige der Kettenglieder (10, 50, 90, ...) derart angepasst sind (10-12, 50-52, 90-92,...), dass an ihnen jeweils ein Anbauteil (13, 53, 93) anbringbar ist, wobei die Anbringung des jeweiligen Anbauteils (13, 53, 93,...) an dem jeweiligen angepassten Kettenglied (10-12, 50-52, 90-92, ...) mittels einer formschlüssigen Verbindung zwischen einem Verbindungsbereich (13a, 13b, 13c, ...) des Anbauteils (13, ...) und einem Verbindungsbereich (12a, 12b, 12c,...) des angepassten Kettenglieds (10-12, ...)gegeben ist, **dadurch gekennzeichnet, dass** der Verbindungsbereich (12a, 12b, 12c,...) des angepassten Kettenglieds (10-12, ...) eine zu dem Verbindungsbereich (13a, 13b, 13c, ...) des Anbauteils (13....) komplementäre Aussparung ist, die als nutartige Vertiefung in der Oberfläche (12d, 12e) des angepassten Kettenglieds (10-12,....) entlang einer Nutrichtung (N) ausgebildet ist, wobei gegenüberliegende Nutwände jeweils eine Hinterschneidung (12a, 12b, ...) parallel zur Oberfläche (12d, 12e) des angepassten Kettenglieds (10-12, ...) und mit einer Tiefe (t) senkrecht zur Nutrichtung (N) aufweisen, in die entsprechende sockelartige Verbreiterungen (13a, 13b, ....) im Verbindungsbereich des Anbauteils (13,...) komplementär hineinpassen.

2. System nach Anspruch 1, **dadurch gekennzeichnet, dass** an den mindestens einigen der Kettenglieder (10, 50, 90) jeweils ein Anbauteil angebracht ist.

3. System nach Anspruch 1 oder 2, **dadurch gekennzeichnet, dass** mindestens eine der beiden Hinterschneidungen (12a) eine Hinterschneidungstiefe (t) senkrecht zur Nutrichtung (N) hat, die geringer ist als die durch elastische Verformung erzielbare maximale Aufweitung (Δ a) der lichten Weite (a) der Nut senkrecht zur Nutrichtung (N).

4. System nach einem der vorhergehenden Ansprüche, **dadurch gekennzeichnet, dass** mindestens eine der Hinterschneidungen (12a) im Schnitt senkrecht zur Nutrichtung (N) die Form einer konkaven Rundung (12a) hat und der Oberflächenbereich des angepassten Kettenglieds (10-12) oberhalb der Hinterschneidung (12a) im Schnitt senkrecht zur Nutrichtung (N) die Form einer konvexen Rundung (12f) hat, wobei der Übergangsbereich (12g) zwischen der konvexen Rundung (12f) und der konkaven Rundung (12a) der am weitesten senkrecht zur Nutrichtung (N) in die Nutöffnung ragende Bereich der Nutwand ist.

5. System nach einem der vorhergehenden Ansprüche, **dadurch gekennzeichnet, dass** im Boden der Vertiefung mindestens eine noppenartige Erhebung (12c) und/oder eine Vertiefung vorgesehen ist, die in eine entsprechende komplementäre Vertiefung (13c) und/oder eine Arretierwarze im Verbindungsbereich des Anbauteils (13) hineinpasst.

6. System nach einem der vorhergehenden Ansprüche, **dadurch gekennzeichnet, dass** im Boden der Vertiefung mindestens eine wulstartige Erhebung und/oder eine Vertiefung vorgesehen ist, die sich in einer zur Nutrichtung (N) nicht parallelen Richtung erstreckt.

7. System nach einem der vorhergehenden Ansprüche, **dadurch gekennzeichnet, dass** die angepassten Kettenglieder (10-12, 50-52, 90-92....) jeweils aus einem regulären Kettenglied (10, 50, 90) und einem damit formschlüssig verbundenen Anpassungsteil (12, 52, 92,...) bestehen, das derart ausgebildet ist, dass an ihm jeweils das Anbauteil (13, 53, 93) anbringbar ist.

8. System nach Anspruch 7, **dadurch gekennzeichnet, dass** das Anpassungsteil (12, 52, 92, ...) auf beidseitig überstehenden Bolzen (14, 15) des jeweiligen angepassten Kettenglieds (10-12, 50-52, 90-92, ...) der Kette formschlüssig in Eingriff ist.

9. System nach Anspruch 8, **dadurch gekennzeichnet, dass** das Anpassungsteil (12) senkrecht zur Kettenlängsrichtung (K) einen im wesentlichen U-förmigen Querschnitt hat mit einem Quersteg (12h) und zwei vom Quersteg im wesentlichen senkrecht abgewinkelten Schenkeln (12i, 12j), wobei das U-förmige Anpassungsteil (12) das jeweilige Kettenglied (10) formschlüssig umgreift.

10. System nach Anspruch 9, **dadurch gekennzeichnet, dass** die Schenkel (12i,.12j) an ihren dem Kettenglied (10) zugewandten Innenseiten mindestens eine Aussparung bzw. Bohrung (12k) aufweisen, in die der mindestens eine überstehende Bolzen (14, 15) des jeweiligen Kettenglieds formschlüssig hineinpasst.

11. System nach Anspruch 10, **dadurch gekennzeichnet, dass** die Schenkel (12i, 12j) des Anpassungsteils (12) an ihrem Endbereich auf ihrer dem Kettenglied zugewandten Innenseite durch eine Abschrägung (12l) zum Schenkelende hin aufgeweitet sind.

12. System nach einem der vorhergehenden Ansprüche, **dadurch gekennzeichnet, dass** das Anbauteil (13) ein Winkelstück ist, bei dem der erste Winkelschenkel den Verbindungsbereich (13a, 13b, 13c) des Anbauteils (13) aufweist, und dessen zweiter Winkelschenkel (13d) sich in einem Winkel (γ) vom ersten Winkefschenkel erstreckt.

13. System nach Anspruch 12, **dadurch gekennzeichnet, dass** der erste Winkelschenkel derart formschlüssig in das angepasste Kettenglied (10-12) passt, dass die Innenfläche (13e) des ersten Winkelschenkels mit der Oberfläche (12d, 12e) des angepassten Kettenglieds (10-12) bündig ist.

14. System nach einem der Ansprüche 7 bis 13, **dadurch gekennzeichnet, dass** das Anbauteil (13) mit dem Anpassungsteil (12) durch formschlüssige Verbindung zwischen einem Verbindungsbereich (13a, 13b, 13c) des Anbauteils (13) und einem Verbindungsbereich (12a, 12b, 12c) des Anpassungsteils (12) verbunden ist.

15. System nach einem der Ansprüche 7 bis 14, **dadurch gekennzeichnet, dass** der Verbindungsbereich (12a, 12b, 12c) des Anpassungsteils (12) eine zu dem \/erbindungsbereich (13a, 13b, 13c) des Anbauteils (13) komplementäre Aussparung ist.

16. System nach einem der Ansprüche 7 bis 15, **dadurch gekennzeichnet, dass** die Aussparung eine nutartige Vertiefung in der Oberfläche (12d, 12e) des Anpassungsteils (12) entlang einer Nutrichtung (N) ist, wobei gegenüberliegende Nutwände jeweils eine Hinterschneidung (12a, 12b) parallel zur Oberfläche (12d, 12e) des Anpassungsteils (12) und mit einer Tiefe (t) senkrecht zur Nutrichtung (N) aufweisen, in die entsprechende sockelartige Verbreiterungen (13a, 13b) im Verbindungsbereich des Anbauteils (13) komplementär hineinpassen.

17. System nach einem der vorhergehenden Ansprüche, **dadurch gekennzeichnet, dass** das Anbauteil (13) ein Winkelstück ist, bei dem der erste Winkelschenkel der Verbindungsbereich (13a, 13b, 13c) des Anbauteils (13) ist und dessen zweiter Winkelschenkel (13d) sich in einem Winkel (γ) vom ersten Winkelschenkel (13a, 13b, 13c) erstreckt.

18. System nach Anspruch 17, **dadurch gekennzeichnet, dass** der erste Winkelschenkel derart formschlüssig in das Anpassungsteil (12) passt, dass die Innenfläche (13e) des ersten Winkelschenkels mit der Oberfläche (12d, 12e) des Anpassungsteils (12) bündig ist.

19. System nach einem der Ansprüche 1 bis 18, **dadurch gekennzeichnet, dass** es in der Schokoladenverarbeitung, insbesondere im Bereich von Kühlbahnen und/oder Wärmebahnen verwendbar ist.

## Claims

1. A chain transport system which has chain elements (10, 20, 30, 40, 50, ...) arranged in a row and in which adjacent chain elements (10-20, 20-30, 30-40, 40-50, ...) are connected to one another such that they are rotatable about an axis of rotation (11, 21, 31, 41, 51, ...) common to the two chain elements, and all axes of rotation (11, 21, 31, 41, 51) of the chain transport system extend parallel to one another, at least some of the chain elements (10, 50, 90, ...) being adapted in such a way (10-12, 50-52, 90-92, ...) that a respective mounted part (13, 53, 93) can be attached to them, the attachment of the respective mounted part (13, 53, 93,...) to the respective adapted chain elements (10-12, 50-52, 90-92,...) being effected by means of a form-fitting connection between a connecting region (13a, 13b, 13c, ...) of the mounted part (13, ...) and a connecting region (12a, 12b, 12c, ...) of the adapted chain element (10-12, ...), **characterised in that** the connecting region (12a, 12b, 12c, ...) of the adapted chain element (10-12, ...) is a cutout which is complementary to the connecting region (13a, 13b, 13c, ...) of the mounted part (13, ...) and is constructed as a groove-like depression along a groove direction (N) in the surface (12d, 12e) of the adapted chain element (10-12, ...), opposing groove walls each having an undercut (12a, 12b, ...) parallel to the surface (12d, 12e) of the adapted chain element (10-12, ...) and with a depth (t) perpendicular to the groove direction (N), in which corresponding plinth-like widenings (13a, 13b, ...) fit complementarily in the connecting region of the mounted part (13, ...).

2. A system according to Claim 1, **characterised in that** a respective mounted part is attached to at least some of the chain elements (10, 50, 90).

3. A system according to Claim 1 or 2, **characterised in that** at least one of the two undercuts (12a) has an undercut depth (t) perpendicular to the groove direction (N) which is smaller than the maximum widening (Δa) of the inside width (a) of the groove perpendicular to the groove direction (N) which can be achieved by elastic deformation.

4. A system according to one of the preceding claims, **characterised in that**, as seen in section perpendicular to the groove direction (N), at least one of the undercuts (12a) has the form of a concave curvature (12a) and, as seen in section perpendicular to the groove direction (N), the surface region of the adapted chain element (10-12) has the form of a convex curvature (12f) above the undercut (12a), the transition region (12g) between the convex curvature (12f) and the concave curvature (12a) being the region projecting furthest into the groove opening perpendicular to the groove direction (N).

5. A system according to one of the preceding claims, **characterised in that**, provided in the base of the depression, there is at least one raised knob-like portion (12c) and/or a depression which fits into a corresponding complementary depression (13c) and/or a retention lug in the connecting region of the mounted part (13).

6. A system according to one of the preceding claims, **characterised in that**, provided in the base of the depression, there is at least one raised bead-like portion and/or a depression which extends in a direction which is not parallel to the groove direction (N).

7. A system according to one of the preceding claims, **characterised in that** the adapted chain elements (10-12, 50-52, 90-92, ...) each comprise a regular chain element (10, 50, 90) and an adapting part (12, 52, 92, ...) which is connected thereto with form fit and which is constructed in such a way that the respective mounted part (13, 53, 93) can be attached to it.

8. A system according to Claim 7, **characterised in that** the adapting part (12, 52, 92, ...) is in form-fitting engagement with pins (14, 15) of the respective adapted chain element (10-12, 50-52, 90-92, ...) of the chain which protrude on both sides.

9. A system according to Claim 8, **characterised in that** the adapting part (12) has a substantially U-shaped cross-section perpendicular to the longitudinal chain direction (K), with a transverse web (12h) and two limbs (12i, 12j) angled substantially perpendicularly from the transverse web, the U-shaped adapting part (12) reaching round the respective chain element (10) with form fit.

10. A system according to Claim 9, **characterised in that**, on their insides facing the chain element (10), the limbs (12i, 12j) have at least one cutout or bore (12k) in which the at least one protruding pin (14, 15) of the respective chain element fits with form fit.

11. A system according to Claim 10, **characterised in that**, at their end region, the limbs (12i, 12j) of the adapting part (12) are widened towards the limb ends by a chamfer (12l) on their inside facing the chain element.

12. A system according to one of the preceding claims, **characterised in that** the mounted part (13) is an angle piece, in which the first angle limb has the connecting region (13a, 13b, 13c) of the mounted part (13) and its second angle limb (13d) extends at an angle (γ) from the first angle limb.

13. A system according to Claim 12, **characterised in that** the first angle limb fits with form fit in the adapted chain element (10-12) in such a way that the inside face (13e) of the first angle limb is flush with the surface (12d, 12e) of the adapted chain element (10-12).

14. A system according to one of Claims 7 to 13, **characterised in that** the mounted part (13) is connected to the adapting part (12) by a form-fitting connection between a connecting region (13a, 13b, 13c) of the mounted part (13) and a connecting region (12a, 12b, 12c) of the adapting part (12).

15. A system according to one of Claims 7 to 14, **characterised in that** the connecting region (12a, 12b, 12c) of the adapting part (12) is a cutout which is complementary to the connecting region (13a, 13b, 13c) of the mounted part (13).

16. A system according to one of Claims 7 to 15, **characterised in that** the cutout is a groove-like depression along a groove direction (N) in the surface (12d, 12e) of the adapting part (12), opposing groove walls each having an undercut (12a, 12b) parallel to the surface (12d, 12e) of the adapting part (12) and with a depth (t) perpendicular to the groove direction (N), in which corresponding plinth-like widenings (13a, 13b) fit complementarily in the connecting region of the mounted part (13).

17. A system according to one of the preceding claims, **characterised in that** the mounted part (13) is an angle piece, in which the first angle limb is the connecting region (13a, 13b, 13c) of the mounted part (13) and its second angle limb (13d) extends at an angle (γ) from the first angle limb (13a, 13b, 13c).

18. A system according to Claim 17, **characterised in that** the first angle limb fits with form fit in the adapting part (12) in such a way that the inside face (13e) of the first angle limb is flush with the surface (12d, 12e) of the adapting part (12).

19. A system according to one of Claims 1 to 18, **characterised in that** it can be used in chocolate processing, particularly in cooling lines and/or heating lines.

## Revendications

1. Dispositif transporteur à chaîne qui comporte des chaînons articulés (10, 20, 30, 40, 50,...) alignés les uns sur les autres, dont les chaînons voisins (10-20, 20-30, 30-40, 40-50,...) sont assemblés par un axe de rotation commun (11, 21, 31, 41, 51,...), tous les axes de rotation (11, 21, 31, 41, 51) étant parallèles, dont au moins quelques-uns des chaînons (10, 50, 90, ...) sont adaptés (10-12, 50-52, 90-92, ...) pour recevoir une pièce rapportée (13, 53, 93), dont toutes les pièces rapportées (13, 53, 93,...) sont fixées sur les chaînons adaptés (10-12, 50-52, 90-92) par clabotage entre une zone d'assemblage (13a, 13b, 13c,...) de la pièce rapportée (13) et une zone d'assemblage (12a, 12b, 12c,...) du chaînon adapté (10-12,...) **caractérisé en ce que** la zone d'assemblage (12a, 12b, 12c,...) du chaînon adapté (10-12,...) est constitué d'un évidement de forme complémentaire à celle de la zone d'assemblage (13a, 13b, 13c,...) de la pièce rapportée (13,...) que ledit évidement est une rainure ménagée dans la surface (12d, 12e) du chaînon adapté (10-12,...) s'étendant en direction (N), que les parois se faisant face de ladite rainure comportent une contre-dépouille (12a, 12b,...) parallèle à la surface (12d, 12e,...) du chaînon adapté (10-12,...) et avec une profondeur (t) perpendiculaire à la direction (N) de la rainure, que dans lesdites contre-dépouilles peuvent s'engager des épaulements de forme complémentaire (13a, 13b,...) de la zone d'assemblage de la pièce rapportée (13).

2. Dispositif selon la revendication 1, **caractérisé en ce que** sur au moins quelques-uns des chaînons adaptés (10, 50, 90) est fixée une pièce rapportée.

3. Dispositif selon les revendications 1 ou 2, **caractérisé en ce que** la profondeur (t), perpendiculaire à la direction (N) de la rainure, d'au moins l'une (12a) des deux contre-dépouilles est plus petite que l'élargissement maximal (Δa), obtenu par déformation élastique, de la largeur intérieure (a) de la rainure, perpendiculaire à la direction (N) de la rainure.

4. Dispositif selon l'une des revendications précédentes, **caractérisé en ce que** selon une coupe perpendiculaire à la direction (N) de la rainure, au moins l'une (12a) des contre-dépouilles présente la forme d'un arrondi concave (12a) alors que la zone de la surface du chaînon adapté (10-12) située au-dessus de la contre-dépouille (12a) présente un arrondi convexe (12f), la zone de transition (12g) entre l'arrondi convexe (12f) et l'arrondi concave (12a) étant constituée par la zone de la paroi de la rainure qui est le plus profondément saillante dans l'ouverture de la rainure, perpendiculairement à la direction (N) de la rainure.

5. Dispositif selon l'une des revendications précédentes, **caractérisé en ce que** le fond de la rainure comporte au moins une saillie en forme de noppe (12c) et/ou un creux, adapté à un creux (13c) et/ou une bosse complémentaire de blocage prévu dans/sur la zone d'assemblage de la pièce rapportée (13).

6. Dispositif selon l'une des revendications précédentes, **caractérisé en ce que** le fond de la rainure comporte au moins une saillie en forme de bourrelet et/ou un creux s'étendant dans une direction qui n'est pas parallèle à la direction (N) de la rainure.

7. Dispositif selon l'une des revendications précédentes, **caractérisé en ce que** les chaînons adaptés (10-12, 50-52, 90-92,...) se composent d'un chaînon normal (10, 50, 90) et d'un élément adaptateur (12, 52, 92) assemblés par clabotage, l'élément adaptateur (12, 52, 92,...) étant conçu pour que la pièce rapportée (13, 53, 93) puisse y être fixée.

8. Dispositif selon la revendication 7, **caractérisé en ce que** le chaînon adapté (12, 52, 92,...) est assemblé par clabotage avec des tourillons (14, 15) saillants de part et d'autre du chaînon adapté (10-12, 50-52, 90-92,...) correspondant.

9. Dispositif selon la revendication 8, **caractérisé en ce que** l'élément adaptateur (12) présente une section transversale, perpendiculaire à la direction longitudinale (K) du dispositif transporteur à chaîne, sensiblement en forme de U comprenant une traverse (12h) et deux branches (12i, 12j) sensiblement perpendiculaires à ladite traverse, l'élément adaptateur (12) en forme de U entourant le chaînon correspondant (10) par un assemblage par clabotage.

10. Dispositif selon la revendication 9, **caractérisé en ce que** les branches (12i, 12j) comportent sur leur face intérieure orientée vers le chaînon (10) au moins un évidement, respectivement un alésage (12k), dans lequel peut s'engager par clabotage le tourillon (14, 15) saillant du chaînon correspondant.

11. Dispositif selon la revendication 10, **caractérisé en ce que** les branches (12i, 12j) de l'élément adaptateur (12) s'élargissent sur la paroi intérieure de leur zone d'extrémité par un biseau (12l) orienté vers l'extrémité desdites branches.

12. Dispositif selon l'une des revendications précédentes, **caractérisé en ce que** la pièce rapportée (13) est une pièce angulaire dont l'une des branches comporte une zone (13a, 13b, 13c) destinée à l'assemblage de la pièce rapportée (13) et dont l'autre branche (13d) s'étend avec un angle (γ) par rapport à la première branche.

13. Dispositif selon la revendication 12, **caractérisé en ce que** la première branche de la pièce angulaire est conçue pour s'engager par clabotage dans le chaînon adapté (10-12) de sorte que la face intérieure (13e) de ladite première branche angulaire affleure sur la surface (12d, 12e) du chaînon adapté (10-12).

14. Dispositif selon l'une des revendications 7 à 13, **caractérisé en ce que** la pièce rapportée (13) est assemblée avec l'élément adaptateur (12) par clabotage entre la zone d'assemblage (13a, 13b, 13c) de la pièce rapportée (13) et la zone d'assemblage (12a, 12b, 12c) de l'élément adaptateur (12).

15. Dispositif selon l'une des revendications 7 à 14, **caractérisé en ce que** la zone d'assemblage (12a, 12b, 12c) de l'élément adaptateur (12) est constituée d'un évidement complémentaire à la zone d'assemblage (13a, 13b, 13c) de la pièce rapportée (13).

16. Dispositif selon l'une des revendications 7 à 15, **caractérisé en ce que** l'évidement est constitué d'une rainure ménagée dans la surface (12d, 12e) de l'élément adaptateur (12), qui s'étend en direction (N), que les deux parois de la rainure se faisant face comportent chacune une contre-dépouille (12a, 12b) parallèle à la surface (12d, 12e) de l'élément adaptateur (12) avec une profondeur (t) perpendiculaire à la direction (N) de la rainure, et que des épaulements (13a, 13b) de forme complémentaire prévus dans la zone d'assemblage de la pièce rapportée (13) peuvent s'engager dans lesdites contre-dépouilles.

17. Dispositif selon l'une des revendications précédentes, **caractérisé en ce que** la pièce rapportée (13) est une pièce angulaire dont l'une des branches comporte une zone (13a, 13b, 13c) destinée à l'assemblage de la pièce rapportée (13) et dont l'autre branche (13d) s'étend avec un angle (*γ*) par rapport à la première branche (13a, 13b, 13c).

18. Dispositif selon la revendication 17, **caractérisé en ce que** la première branche de la pièce angulaire s'engage par clabotage dans l'élément adaptateur (12) de sorte que la face intérieure (13e) de ladite première branche angulaire affleure sur la surface (12d, 12e) de l'élément adaptateur (12).

19. Dispositif selon l'une des revendications 1 à 18, **caractérisé en ce que** il est utilisé dans le secteur de la transformation du chocolat, en particulier dans la zone des chemins de refroidissement et/ou de réchauffement.
